# EUROPEAN PATENT APPLICATION

(11) **EP 3 748 337 A1**
(43) Date of publication of application: **09.12.2020**
(21) Application number: 19178822.3
(22) Date of filing: 06.06.2019
(51) Int. Cl.: G01N 21/359, G01N 21/65, G01N 21/85, G01N 21/15, G01N 21/3563, G01N 21/95

(54) **PROBE FOR SIMULTANEOUS ANALYSIS USING DIFFERENT SPECTROSCOPIC TECHNIQUES, AND CORRESPONDING METHOD**

(71) Applicant: Measure Analyse Control bvba, 9250 Waasmunster (BE)
(72) Inventor: VERMEIRE, Tomas, 9250 Waasmunster (BE)
(74) Representative: Brantsandpatents bvba

(57) **Abstract**

A probe, enabling the simultaneous use of two or more spectroscopic or photometric techniques, comprising a window (1), set in the pathway of the radiation and a mechanical optical assembly to align the different radiations from the connected excitation sources to the product and back to the analysers while eliminating the interferences.

## Description

### FIELD OF THE INVENTION

The present invention relates to an apparatus for the electromagnetic spectrum or optical analysis of a material to be analysed that is located in a processing, transport or storage confinement, such as a feeder, blender, container or tube, in particular for the spectrophotometric, photometric or image analysis of pure or blended powder, bulk material, granulated material, cream, viscous fluid and similar, with a measuring probe having at least one radiation or light reception element, at least one window, arranged in the pathway of the radiation in the tip of the apparatus, and with at least two outputs to analysis instruments.

### BACKGROUND

D1 describes prior art in the form as "optical probe includes a probe body having a window with a Surface oriented toward a Sample under investigation" in US patent 6873409B1. It describes the method of using of a fluid to prevent the sample under investigation from coming in contact to the window surface. "The approach is applicable to any form of optical Sampling, including Raman detection, fluorescence, and So forth."
Also known is the device from D2 (US2014/0340683A1) that has a front window with a surface oriented towards a sample for investigation of it. The patent further describes the window to be used for different spectroscopic methods by stating "According to the invention, a window is intended to mean a component of the measuring apparatus which is at least partially transparent for electromagnetic radiation. Preferably, the window is at least partially transparent for electromagnetic radiation in the wavelength range of from 200 to 700 nm (UV/Vis) and/or in the wave number range of from 400 to 4000 cm (IR) and/or from 4000 to 14000 cm (NIR).", and a method to flush the window to keep it clean.
Prior art is also found in D3 (US8730467B2) where a probe is described that is able to take simultaneous spectroscopic measurements in different locations. The patent describes a method of detecting inhomogeneities in a sample using this type of probe. The application can be used with different types of spectroscopy: "This analysis device also includes means for emitting monochromatic or polychromatic light, in particular within a range of ultraviolet, visible, infrared, near infrared or also mid infrared wavelengths. This emitted light will be used for illuminating the sample to be analysed in particular by means of the above-mentioned probe.'

It is also known from probes, the like of prior art D4 (US20080212087A1) to use different spectrophotometric or photometric techniques in reflection to analyse material located in product space using a separate tangentially oriented window set in the circumferential wall for each spectrophotometric or photometric technique. D5 shows a further embodiment of prior art allowing the use of two spectroscopic techniques in US00611852A where a special designed probe tip guarantees two independent optical paths. The patent mentions: "The types of Spectrometric analyses that may be performed with the present probe include, for example, attenuated total reflectance (ATR), light Scatter analysis, image analysis, and refractive index (RI) determination. Light Scatter analysis may include backScatter analysis, Raman, Rayleigh Scattering, and fluorescence, for example."

The devices in D1 and D2 do mention to have specific elements to keep observation windows clean of product adhesion but, although different spectral technologies are mentioned, they are only designed to use one of these simultaneously. The design of the observation windows is too small to allow any simultaneous measurements. Increasing the size of the windows would result in such an increase of fluid needed to keep the window(s) clean that the process will be seriously disturbed and the result of at least one of the spectroscopic technologies would be completely unreliable.
D3 has options for connecting different analysers but is absolutely not suited for simultaneous use of different spectroscopic technologies as the design shows no provisions for inhibiting the interference of light sources for the different technologies which will result in interference and unreliable results.
The design in D4 can possibly overcome interference issues with multiple light sources by the use of two different tangentially oriented windows but by doing so, it will measure different parts of the product. In a linear flowing product stream the insertion of the probe will affect the flow, causing product to be trapped to the side facing the product stream and eddies or even a void behind it that might promote segregation in case of mixtures. This will give raise to unreliable measurements when the probe is not correctly oriented.
While the design in D5 allows for simultaneous use of different spectroscopic techniques, it relies on being immersed in product and will hence, like D4, have an influence on the behaviour of the product stream. In certain mixtures, this will result in segregation issues.

The present invention aims to resolve at least some of the problems and disadvantages mentioned above.

The invention thereto aims to provide the possibility for simultaneous use of multiple spectrophotometric or photometric techniques through one or multiple windows set in the tip of the probe body, without disturbing the process flow and while eliminating any possible interference of the signals.

Without limiting the invention to these applications, the invention is well suited for continuous processes like mixing, filling or tableting where blends of pharmaceutical powders or granules need to be analysed without any risk of segregation or other influences that probes might cause in such systems.

Furthermore, the present invention is also related to a method of improving the accuracy of each individual spectroscopic technique by combining parts or results generated by the second technique.

### SUMMARY OF THE INVENTION

The present invention and embodiments thereof serve to provide a solution to one or more of above-mentioned disadvantages.
To this end, the invention relates to a spectroscopic probe, according to claim 1, for multiple spectroscopic analysing instruments. The invention enables these devices to be used simultaneously by the application of optical filters that filter out the causes of interference that would normally occur when using these spectroscopic techniques simultaneously on the same volume of product. As an illustration of the use of these filters, a specific embodiment of the invention where Raman and NIR spectroscopy are combined for example, could be made by installing a cut-off filter that limits the lower wavelength of the NIR light source to for example about 1100 nm when the upper range of the Raman signal is for example about 950 nm. This way, there is no interference of the NIR light source in the Raman signal and both spectrometers can function simultaneously.
The usage of these optical filters allows the invention to do these simultaneous measurements through the same, single, front mounted window. Preferred embodiments of the device are shown in any of the claims 1 to 9.
The single, front mounted window of the probe ensures that the process to be analysed is left undisturbed while the two or more spectroscopic techniques are analysing the same volume of the product.
The invention also relates to the use of a parabolic concentrator in the launch path of spectroscopic or photometric techniques. The use of this concentrator reduces specular reflection on the window surfaces, improving the signal.

Finally the invention relates to a method, according to claim 10, for combining the at least two spectroscopic or photometric techniques to improve the modelling performance of each individual technique by adding their results or parts of their results to an overlying model.
In the specific embodiment of the Raman NIR probe mentioned above, the Raman signal is less vulnerable for window adhesion of product and could be used to correct the NIR signal when such event occurs. The NIR signal is much faster and could detect small process inhomogeneities but is more vulnerable for window fouling. Thus combining both methods in an overlying model will improve the reliability of the measurements. This example is not limiting the extend of the method as more synergy effects are expected, also with combinations of other spectroscopic or photometric methods.

### DESCRIPTION OF FIGURES

The following description of the figures of specific embodiments of the invention is merely exemplary in nature and is not intended to limit the present teachings, their application or uses. Throughout the drawings, corresponding reference numerals indicate like or corresponding parts and features.
**Figure 1** shows a sectional view of an embodiment of the probe, along the longitudinal axis, showing the principles of an embodiment with provisions for two spectroscopic or photometric techniques. The probe has optical channels protruding from its back end that connect to the excitation sources and the detection instruments of the two spectroscopic or photometric techniques. It is further described in example 1.
**Figure 2** shows the back of the same embodiment where the optical channels protruding from the probe have been replaced with optical connections making the probe easier to handle. This embodiment is not further described.
**Figure 3** shows a refinement of the present invention where the probe is fitted to a system through a window. In this refinement, optics will have to be slightly adapted to take the extra reflections and distances of the window into account. The figure is not further discussed in detail.
**Figure 4** shows yet another possible refinement of the present invention where the probe tip is adapted to the internal curvature of the product vessel. In this refinement, optics will have to be slightly adapted to take the extra lens action of the curvature into account. The figure is not further discussed in detail.
**Figure 5** shows a cross section of the optical details of the preferred embodiment of a probe combining NIR and Ram an spectroscopy. The figure is further discussed in detail in example 2.
**Figure 6** shows the cross section of another embodiment possible for the probe described in example 2 where 2 windows are used instead of one.

### DETAILED DESCRIPTION OF THE INVENTION

The present invention concerns a probe for spectroscopic and/or photometric measurements of solid or liquid products, or a combination thereof, in a static or dynamic state. The design of the probe makes it possible to use multiple spectroscopic or photometric measurement techniques simultaneously on the same, overlapping or adjacent volumes of material without any interference between the used techniques. The probe design also has no influence on the product behaviour other than the change in surface properties of the probe window compared to the process container walls.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

All references cited in the present specification are hereby incorporated by reference in their entirety. In particular, the teachings of all references herein specifically referred to are incorporated by reference.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

The term 'Window', as used in this document means a barrier between the inside of the probe and the product or process made of material that is transparent for the techniques used and that is protecting the inside of the probe from the product to be measured. The chosen material is also chemically resistant to the product to be measured. A window could for instance, but is not limited to be made out of Sapphire, Cubic Zirconium or Diamond.

'Spectroscopic or photometric technique' as used throughout the text can mean any technique where electromagnetic radiation is analysed as there are Ultra Violet spectroscopy, Light Induced Fluorescence, Near Infrared spectroscopy, Raman spectroscopy, Mid Infrared spectroscopy, Image Analysis, ...

'Excitation radiation' means any source of light that is used to cause the product to generate an photometric or spectroscopic signal. For example but not limited to a laser beam, an NIR light source, a UV light source, ...

An 'optical channel' is a channel that guides electromagnetic radiation towards or from the sample. Typically used in spectroscopy, although the invention at hand can make use of others, are optical fibers, optical fiber bundles or light tubes.

In a first aspect the invention relates to a probe configured for simultaneously using two or more spectroscopic or photometric techniques. Preferably, the probe comprises at least two spectroscopic or photometric assemblies. Preferably the probe comprises a first spectroscopic or photometric assembly and a second spectroscopic or photometric assembly. Preferably, the probe comprises a window. Preferably, the window is set in the pathway of the radiation and a mechanical optical assembly to align the different radiations from the connected excitation sources to the product and back to the analysers while eliminating the interferences. Preferably, the window is an optical transparent window. Preferably, the window is made from a material which allows the passage of electromagnetic radiations, more preferably the window allows passage of visible light, ultraviolet light, infrared light or near infrared light.

The window is beneficial for enabling the simultaneous use of at least two spectroscopic or photometric techniques, therefor being beneficial for analysing a composition with a higher accuracy. This is advantageous for the quality assurance of compositions, especially for chemical compositions, and especially for chemical compositions in the pharmaceutical applications. Moreover, the window makes sure the optical assemblies and or optical components in the probe do not come in physical contact with a to be tested sample, which is beneficial for retaining the working of he probe and for not contaminating the sample.
Further, through the combination of more than one assemblies, the dimensions of the system can be optimized. Moreover, the probe is beneficial for the construction of portable devices which are capable of testing a composition with high accuracy on remote locations.

In a preferred embodiment the probe comprises at least one illumination optical channel and at least one reflection optical channel. Preferably, each spectroscopic or photometric assembly comprises at least one illumination optical channel and at least one reflection optical channel. Preferably, the illumination fibre leads an excitation radiation towards the window, and eventually towards a sample to be tested. Preferably, the reflection optical channel leads the reflected radiation to a measuring system. Preferably, the optical channel is a fibre, more preferably an optical fibre.
In a preferred embodiment the probe comprises at least one lens configured for converting a monochromatic excitation radiation into a collimated beam at the end of a first excitation optical channel in the probe. Preferably, the probe comprises at least one mirror. Preferably, the mirror is configured for bringing the collimated beam into a central optical pathway. Preferably, the mirror is configured for reflecting the monochromatic wavelength but otherwise being transparent. Preferably, the central optical pathway is a space delimited by the expansion of an optical fibre bundle transporting the second excitation radiation before that optical channel ends in an illumination ring. Preferably, the probe comprises a parabolic concentrator. Preferably, the excitation radiation of the second source, exciting the ring of fibres, is focused through the window by means of the parabolic concentrator. Preferably, both excitation radiations concur thereafter through the window to interact with the same volume of product and the resulting radiation propagates back into the same optical pathway and through the mirror that reflected the monochromatic excitation radiation into the optical pathway. Preferably, behind the mirror, the radiation is focused to the numerical aperture of the optical channels leading towards the analysers by a focusing optic. Preferably, the radiation is split into the wavelength ranges suitable for each analyser using selective mirrors. Preferably, the probe comprises at least one filter. Preferably, the radiation is filtered from interference wavelengths using specific filters before entering the optical channels.

In a preferred embodiment of the invention the excitation radiations of the different techniques, after being cleared of any interference sources by the use of optical filters, are combined in a single optical channel that targets the light to the product volume through the optical window. The optical design is made as such that the specular reflection and the backscatter in the optical channel are minimized for example but not limited by the use of anti-reflective coating or focusing lenses. The resulting electromagnetic of photometric signal coming back from the probe in the same optical channel is split by the use of dichroic mirrors into the fractions desired for each optical technique and sent back to the analysers through different optical channels.

In a preferred embodiment of the invention, each technique has its own excitation channel where the signal, after again being cleared of any possible interference sources, is send to the product or process through an individual window for each channel or one common window for both channels. In the case of individual windows, different coatings and lenses can be used on the inside of the window as mentioned in the preferred embodiment. The resulting electromagnetic or photometric signal can be sent back to the analysers, using the same optical channel, directly or through additional dichroic filters to filter out additional disturbances like, but not limiting to, excitation laser wavelengths.

In a preferred embodiment the probe comprises at least two optical pathways. Preferably, the optical pathway is split into individual pathways for each spectroscopic or photometric technique.

In a preferred embodiment the probe comprises at least two windows. Preferably, each window is configured for being transparent to the specific technique used. This is especially advantageous for eliminating the interference between the two or more optical assemblies, leading to more accurate results.

In a preferred embodiment the probe comprises a temperature control element. Preferably, the temperature control element is placed around the outside of the optical paths. Preferably, the temperature control element is placed inside the mechanical housing. Preferably, the temperature control element is configured to heat or cool the probe tip and housing. Preferably, the temperature control element is electrically powered by an external controller. Preferably, the temperature control element comprises a temperature sensing element for more accurate control.

In a preferred embodiment the outside of the window is smooth with a curvature of the product enclosure. Preferably, the optics inside the probe are adjusted to match the optical performance of the probe without the curvature.

In a preferred embodiment the probe comprises one or several excitation sources. In a preferred embodiment the probe comprises at least one analyser.

In a preferred embodiment at least one filter is placed near to the one or more excitation sources and/or to the one or more analysers. Preferably, some or all of the filters are moved to the excitation source(s) or to the analyser(s).

In a preferred embodiment the probe comprises a baseline mechanical or optical system. Preferably, the baseline system is configured to be used to baseline the optical or photometric techniques used in process.

In an advantageous refinement of these embodiments, a mechanical, optical or electronical device might be added to the whole to deflect the signal or part of the signals enabling the detectors to baseline themselves against a reference including the whole optical path.

In a further refinement, the probe body may also be equipped with an electrical heating system enabling to heat up or cool down the tip of the probe, avoiding that the measuring window becomes soiled or covered with particles from the process or mists up.

In a further refinement of the embodiments above, the optical window and the probe tip can be adapted to fit in the curvature of a tube side. In this case, additional optics will can be installed to compensate the influence of the curvature on the optical signal.

In a second aspect, the present invention also relates to a method of combining the two or more spectrophotometric or photometric signals, taken simultaneously from material in front of the probe tip, to establish more accurate models for the prediction of the properties of the material to be analysed than models using the individual spectrophotometric or photometric signals.

In a preferred embodiment the method comprises a first step where the product to be analysed is checked with the different spectroscopic or optical techniques to determine the best probe configuration. Preferably, the method further comprises the analysis of the process and processing equipment to determine an installation location where the product to be analysed is representative for the product in the system. Preferably, the method further comprises the adaption of the blender, container, feeder or the like to install the probe with the tip smooth to the inner wall of it or very slightly protruding to avoid product adhering to the probe tip. Preferably, the method further comprises the generation of models for the used spectroscopic or photometric techniques as people as skilled in the art would do characterized in that at least a part of the results of the two or more models are combined in one single (or multiple) meta-models.

In a preferred embodiment the method comprises analysing a chemical, biological or biochemical composition. Preferably, the chemical, biological or biochemical composition is a pure or blended powder, bulk material, granulated material, slurry, cream and similar in a batch or continuous blender, tablet press feed frame, product transport channel or reactor.

In a preferred embodiment the data from the analysers is sent to a machine learning system. Preferably, the data from the analysers is sent to a machine learning system before it was analysed.

In a preferred embodiment the overall result is used for feed-forward process control, adjusting parameters influencing the process downstream in the processing equipment from the installation position of the probe to steer the quality of the end product to target.

In a preferred embodiment the overall result is used for feed-back process control, adjusting parameters of the production system prior to the position where the probe is installed to actively steer the quality of the product to target.

In a preferred embodiment the first spectroscopic or photometric assembly forms at least a part of a Raman spectroscopy system. Preferably, the second spectroscopic or photometric assembly forms at least a part of a near-infrared spectroscopy system. Especially, the combination of a Raman and a near-infrared spectroscopy system is beneficial for determining the accurate chemical composition of a substance.

In a third aspect the invention relates to a system comprising a probe comprising at least two spectroscopic or photometric assemblies and a window, at least two excitation sources and at least one, more preferably at least two analyser. Preferably, whereby the probe has a diameter of at most 5 cm, more preferably at most 4.5 cm, even more preferably at most 4 cm, even more preferably at most 3.5 cm, even more preferably at most 3 cm, even more preferably at most 2.5 cm, even more preferably at most 2 cm.

The invention is further described by the following non-limiting examples which further illustrate the invention, and are not intended to, nor should they be interpreted to, limit the scope of the invention.

### EXAMPLES

The present invention will now be further exemplified with reference to the following example(s). The present invention is in no way limited to the given examples or to the embodiments presented in the figures.

It would be obvious for one skilled in the art that different embodiments discussed in the examples could be combined to any of the embodiments disclosed in the detailed description.

### Example 1: General principle drawing.

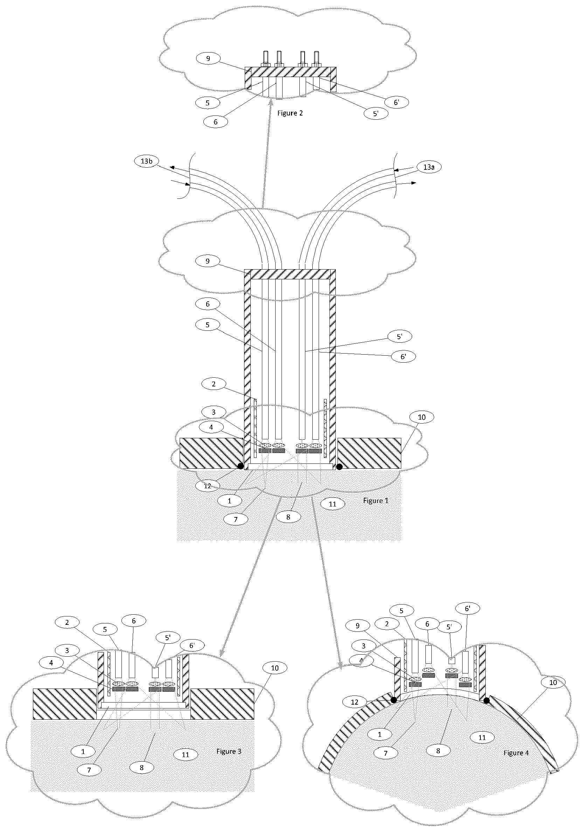

To better exemplify, reference is made to FIG1 which show(s) the longitudinal cross section of the general principle for an embodiment combining two optical spectroscopic or photometric techniques.
The drawing shows the probe body (9) mounted in the product container wall (10), where the probe tip and window (1) are flush with the inner wall of the container and the probe is sealed off to the vessel by a seal (12) that can be specific for each application.
The probe in the shown embodiment, has two optical connections to spectroscopic or photometric techniques (13a and 13b). Each technique has its own source of excitation radiation that is entering the probe body through optical channels (5 and 5'). Depending on the chosen spectroscopic or photometric technique, the excitation radiation will need to be focussed, diverged or collimated by lenses (3) to the correct beam diameter in the probe. As a result, the radiation will be focussed at a certain depth like in the product container as in 7 or will be collimated as in 8. To achieve this focussed, diverged or collimated excitation beam in other embodiments of the probe as shown in Fig 3 and Fig 4, the lenses will need to be of a different configuration. Most of the commercially available spectroscopic or photometric techniques have their own radiation sources which are not designed to be used in combination with other spectroscopic or photometric techniques, therefore, it might be necessary to install filters (4) to remove parts of the excitation radiation of one technology that could influence the other. In the shown embodiment, these filters are mounted behind the lenses but there is no reason the filter cannot be mounted before the lenses or even between the excitation source and the optical channel or the filter could be integrated in the focussing lens. For example, when using NIR in combination with Raman, a cut-off filter might be installed in the NIR light source, that is typically generating a very broad wavelength range, to prevent light of interfering wavelengths (mostly the wavelengths below about 1000 nm) to reach the detection channel from the Raman system by internal reflections. The excitation radiation then interferes with the product to be analysed and the returning signal is then focussed into the detection optical channels (6 and 6') by means of focussing optics (3). These focussing optics are designed to channel as much signal as possible to each individual channel.
As the returning signal can still hold interfering signals from the other technique used, again a filter can be installed in the optical path, either before, after or in the lens or just before the analysis instrument.
For some spectroscopic or optical techniques, the quality of the analysis highly depends on the absence of product adhesion to the observation window. It has been shown in literature that heating up the window has a prohibiting effect on this effect for some product and therefore, the probe can be equipped with electrical heating as shown by the heating sheet (2) in Fig 1.
A slightly different embodiment of the invention described above could have the optical channels ending at optical connectors at the end of the probe as shown in Fig 2. This makes the system easier to handle during the mounting phase or the storage. Additional advantages exist for such a configuration when the optical channel is broken between the probe and the analyser. The replacement cost will be much lower and replacement time much faster in such an embodiment.

### Example 2: Details of preferred embodiment for combined NIR and Raman probe.

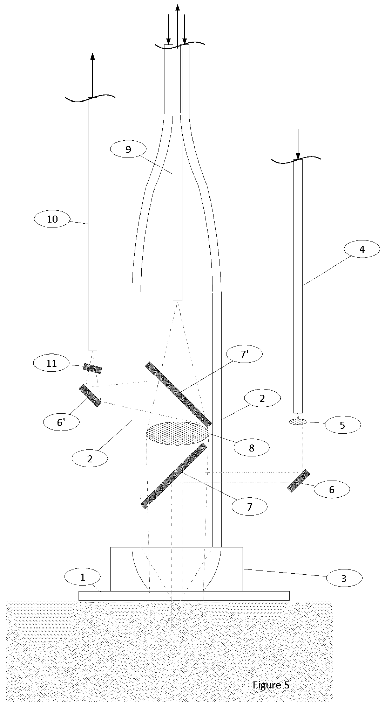

Figure 5 shows a cross section of the preferred embodiment of a combined NIR Raman probe: the NIR excitation radiation source is equipped with a cut-off filter (both not shown) and the light is transmitted to the probe using a fibre bundle. The fibre bundle enters the probe and the drawing by the top and its individual fibres (2) end up evenly spaced at the top of a parabolic concentrator (3) that minimizes losses and backscattering while focusing the light onto the product through the window (1).
The Raman excitation laser enters the probe through a optical channel (4) and is collimated to the desired diameter using an integrated lens (5). The collimated laser beam is then directed towards through an opening in the cylinder of fibres from the NIR light source by a mirror (6) and directed towards the window (1) by using a dichroic mirror (7).
Both excitation radiations interfere with the product and the resulting radiation enters the probe back through the window (1). The dichroic mirror (7) is preventing any specular reflection from the laser beam to enter the detection optical channels while the lens (8) behind it is focussing the radiation towards the optical channel of the NIR system (9) to maximize the light return to the analyser while a second dichroic mirror (7') and a second mirror (6') guide the lower part of the signal back to the Raman optical channel after passing through an additional bandpass filter (11).

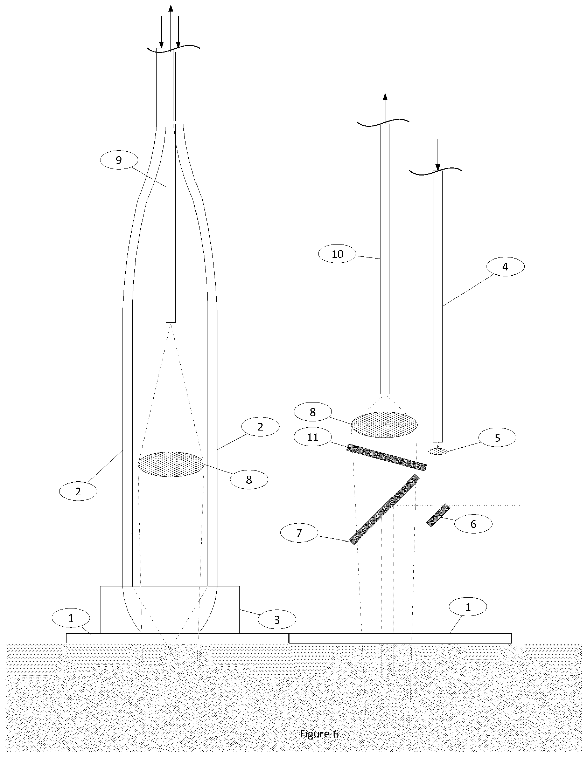

Figure 6 presents in more detail a different embodiment of the NIR Raman probe from FIG. 5 where the NIR and Raman channel are using individual windows set in the tip of the probe.

### Example 3: Enhanced modelling using NIRand Raman simultaneously.

With as a goal illustrating better the properties of the invention the following presents, as an example and limiting in no way other potential applications, a description of a preferred application, wherein a Raman-NIR probe can perform better than the two individual systems:
The penetration of NIR light in packed powder beds is typically between 0,5 and 1 mm according to literature while that of the Raman excitation laser is easily over 1mm. The Raman signal will, as a consequence will be less vulnerable for adhesion of product on the window of the probe.
NIR modelling usually takes a quality parameter into account to evaluate the current spectrum used for modelling against the population used to make the model. This however cannot discriminate between a normal sample high in a certain component of a mixture and that mixture component being permanently adhered to the window of the probe. Combining both, the NIR and the Raman, in one probe, will show a slow drift in the NIR signal while the Raman signal remains much more stable, indicating product adhesion to the window of the probe.

It is supposed that the present invention is not restricted to any form of realization described previously and that some modifications can be added to the presented example of fabrication without reappraisal of the appended claims. For example, the present invention has been described referring to the combination of Raman and NIR in one probe but it is clear that the invention can be applied to the combination of LIF and NIR for instance or to more than two techniques combined in one probe or to any other combination of spectroscopic or photometric techniques.

It is clear that the method according to the invention, and its applications, are not limited to the presented examples.

The present invention is in no way limited to the embodiments described in the examples and/or shown in the figures. On the contrary, methods according to the present invention may be realized in many different ways without departing from the scope of the invention.

## Claims

1. A probe, enabling the simultaneous use of two or more spectroscopic or photometric techniques, comprising of a window, set in the pathway of the radiation and a mechanical optical assembly to align the different radiations from the connected excitation sources to the product and back to the analysers while eliminating the interferences.

2. The probe according to claim 1, wherein monochromatic excitation radiation is converted into a collimated beam by lenses at the end of a first excitation optical channel in the probe and consequently brought into a central optical pathway using mirrors; the mirrors, being capable of reflecting the monochromatic wavelength but otherwise being transparent; the central optical pathway being a space delimited by the expansion of an optical fiber bundle transporting the second excitation radiation before that optical channel ends in an illumination ring; the excitation radiation of the second source, exciting the ring of fibers, is focused through the window by means of a parabolic concentrator, both excitation radiations concur thereafter through the window to interact with the same volume of product and the resulting radiation propagates back into the same optical pathway and through the mirror that reflected the monochromatic excitation radiation into the optical pathway, behind the mirror, the radiation is focused to the numerical aperture of the optical channels leading towards the analysers by a focusing optic, the radiation is split into the wavelength ranges suitable for each analyser using selective mirrors, and filtered from interference wavelengths using specific filters before entering the optical channels.

3. The probe according to claim 1 or 2, wherein the optical pathway is split into individual pathways for each spectroscopic or photometric technique.

4. The probe according to claim 3, wherein the probe comprises at least two windows, whereby preferably each window is configured for being transparent to the specific technique used.

5. The probe according to any of the preceding claims 1-4, wherein the probe comprises a temperature control element placed around the outside of the optical paths, inside the mechanical housing to heat or cool the probe tip and housing, whereby preferably the temperature control element is electrically powered by an external controller , wherein preferably the temperature control element comprises a temperature sensing element for more accurate control.

6. The probe according to any of the preceding claims 1-5, wherein the outside of the window is adapted to be smooth with a curvature of the product enclosure and the optics inside the probe are adjusted to match the optical performance of the probe without the curvature.

7. The probe according to any of the preceding claims 1-6, wherein some or all of the filters are moved to the excitation radiation source(s) or to the analyser(s).

8. The probe according to any of the preceding claims 1-7, wherein one or several of the excitation sources are integrated into the probe.

9. The probe according to any of the preceding claims 1-8, wherein a mechanical or optical system is integrated that can be used to baseline the optical or photometric techniques used in process.

10. A method of using the measurement apparatus in a blender, container, feeder or the like comprising of: 1) a first step where the product to be analysed is checked with the different spectroscopic or optical techniques to determine the best probe configuration; 2) the analysis of the process and processing equipment to determine an installation location where the product to be analysed is representative for the product in the system; 3) the adaption of the blender, container, feeder or the like to install the probe with the tip smooth to the inner wall of it or very slightly protruding to avoid product adhering to the probe tip; 4) the generation of models for the used spectroscopic or photometric techniques as people as skilled in the art would do **characterized in that** the results of the two or more models are combined in one single (or multiple) meta-models.

11. The method according to claim 10 to analyse a chemical, biological or biochemical composition, preferably to analyse a pure or blended powder, bulk material, granulated material, slurry, cream and similar in a batch or continuous blender, tablet press feed frame, product transport channel or reactor.

12. The method according to claim 10 or 11, wherein the data from the analysers is sent to a machine learning system before it was analysed as people skilled in the art would normally do.

13. The method according to claim 10, 11 or 12, wherein the overall result is used for feed-forward process control, adjusting parameters influencing the process downstream in the processing equipment from the installation position of the probe to steer the quality of the end product to target.

14. The method according to any of the claims 10-12, wherein the overall result is used for feed-back process control, adjusting parameters of the production system prior to the position where the probe is installed to actively steer the quality of the product to target.

15. The method according to any of the claims 1-14, wherein the overall result is used for feed-back process control, adjusting parameters of the production system prior to the position where the probe is installed to actively steer the quality of the product to target, and for feed-forward process control, adjusting parameters influencing the process downstream in the processing equipment from the installation position of the probe to steer the quality of the end product to target.

16. Use of the device according to any of the claims 1-9 or the method according to one of the claims 10-15 for analysis of active pharmaceutical ingredient concentration in a pharmaceutical production process.
